# EUROPÄISCHE PATENTANMELDUNG

(11) **EP 4 624 865 A1**
(43) Veröffentlichungstag der Anmeldung: **01.10.2025**
(21) Anmeldenummer: 25161456.6
(22) Anmeldetag: 04.03.2025
(51) Int. Cl.: G01B 11/24, G01N 21/952, B41F 33/00

(54) **VORRICHTUNG ZUM ERFASSEN DER OBERFLÄCHE EINES ROTATIONSKÖRPERS FÜR EINE DRUCKMASCHINE UND VERFAHREN**

(30) Priorität: 27.03.2024 DE 102024108721
(71) Anmelder: Heidelberger Druckmaschinen AG, 69115 Heidelberg (DE)
(72) Erfinder: Witold, Gantzke, 81247 München (DE); Böttger, Andreas, 69118 Heidelberg (DE); Poyer, Andreas, 92637 Weiden (DE)

(57) **Zusammenfassung**

Eine erfindungsgemäße Vorrichtung zum Erfassen der Oberfläche eines Rotationskörpers für eine Druckmaschine, wobei der Rotationskörper (2, 62) a) ein Zylinder, b) eine Walze, c) eine Hülse für einen Zylinder oder für eine Walze oder d) eine Hülse für einen Zylinder oder für eine Walze mit wenigstens einer auf der Hülse angeordneten Druckform ist, mit einem Motor (8) zum Rotieren des Rotationskörpers (2, 62) um eine axiale Rotationsachse (5), mit wenigstens einer Lichtquelle (20), welche wenigstens einen Bereich (11a, 11b) der Oberfläche (10) mit optischem Licht (21) beleuchtet, und mit wenigstens einer optischen Kamera (30) für das Erfassen wenigstens des beleuchteten Bereichs (11a, 11b) der Oberfläche (10), zeichnet sich dadurch aus, dass die Vorrichtung (1) eine optische Einrichtung (40) umfasst, welche das Licht (21) von zwei Teilstrahlen (41), d.h. von einem ersten Teilstrahl (42) und einem zweiten Teilstrahl (43), zu einem Bildsensor (32) der Kamera (30) lenkt, dass der erste Teilstrahl (42) die Oberfläche (10) an einer ersten Stelle (12) tangential trifft oder streift und dann zur Kamera (30) gelangt, und dass der zweite Teilstrahl (43) die Oberfläche (10) an einer - von der ersten Stelle (12) verschiedenen - zweiten Stelle (13) radial trifft und dann zur Kamera (30) gelangt Weiter ist ein entsprechendes erfindungsgemäßes Verfahren offenbart. Die Erfindung ermöglicht es in vorteilhafter Weise, eine schnelle und präzise Vermessung durchzuführen, insbesondere verschiedene Messarten gleichzeitig und/oder mit denselben Mitteln durchzuführen. Die Erfindung kommt z.B. in Mountern für Flexodruckplatten zum Einsatz.

## Beschreibung

### Erfindung

Die Erfindung betrifft eine Vorrichtung zum Erfassen der Oberfläche eines Rotationskörpers für eine Druckmaschine mit den Merkmalen des Oberbegriffs von Anspruch 1 und ein Verfahren zum Erfassen der Oberfläche eines Rotationskörpers für eine Druckmaschine mit den Merkmalen des Oberbegriffs von Anspruch 13.

### Gebiet der Technik

Die Erfindung liegt auf dem technischen Gebiet der grafischen Industrie und dort insbesondere im Bereich des Vermessens von Rotationskörpern wie z.B. Zylinder, Walzen, Hülsen, bevorzugt Flexo-Druckhülsen, oder Platten, bevorzugt Flexo-Druckplatten. Beim Vermessen werden z.B. Erhebungen des Rotationskörpers erfasst. Die Erfindung liegt daher auch insbesondere im Bereich des Flexodrucks, also des Betreibens einer Flexodruckmaschine, d.h. einer Rotationsdruckmaschine für das Drucken mit Flexodruckformen; und des Betreibens deren Peripheriegeräte, insbesondere eines sogenannten Mounters, in dem mehrere Flexodruckformen auf einen Zylinder oder auf eine Zylinderhülse druckjobabhängig angeordnet werden. Im Besonderen liegt die Erfindung dabei auf dem Teilgebiet des exakten Vermessens von "gemounteten" Flexodruckformen, z.B. direkt in dem Mounter.

### Stand der Technik

Es ist bereits bekannt, z.B. gemountete, d.h. auf eine Hülse für das spätere Drucken aufgeklebte, Flexodruckplatten bzw. deren Oberfläche zu Vermessen.

Die DE102020111341A1 offenbart eine Vorrichtung zum Vermessen von Erhebungen der Oberfläche eines als Zylinder, Walze, Hülse oder Platte einer Druckmaschine ausgebildeten Rotationskörpers, z.B. einer Flexo-Druckplatte, mit einem ersten Motor zum Rotieren des Rotationskörpers um eine Rotationsachse und mit einer Messeinrichtung, zeichnet sich dadurch aus, dass die Messeinrichtung zum berührungslosen Vermessen wenigstens eine Lichtquelle und wenigstens eine Flächenkamera umfasst

Die US3907438A offenbart ein System zum Erfassen der Kontur eines Zylinders. Dabei kommt ein Strahlteiler zum Erzeugen zweier Teilstrahlen zum Einsatz und eine zu erfassende Stelle des Zylinders wird von den beiden Teilstrahlen aus unterschiedlichen Richtungen jeweils tangential beleuchtet.

Es sind somit Systeme zum Vermessen bekannt. Dennoch verlangt der Markt beständig nach Neuerungen, insbesondere um Druckprodukte von noch höherer Qualität noch schneller und kostengünstiger herstellen zu können. Die bekannten Systeme können diese Forderung nicht immer in vollem Maße erfüllen.

### Technische Aufgabe

Es ist daher eine Aufgabe der vorliegenden Erfindung, eine Verbesserung gegenüber dem Stand der Technik zu schaffen, welche es insbesondere ermöglicht, eine schnelle und präzise Vermessung durchzuführen, insbesondere verschiedene Messarten gleichzeitig und/oder mit denselben Mitteln durchzuführen.

### Erfindungsgemäße Lösung der Aufgabe

Diese Aufgabe wird erfindungsgemäß durch eine Vorrichtung nach Anspruch 1 und ein Verfahren nach Anspruch 13 gelöst.

Vorteilhafte und daher bevorzugte Weiterbildungen der Erfindung ergeben sich aus den Unteransprüchen sowie aus der Beschreibung und den Zeichnungen.

Eine erfindungsgemäße Vorrichtung zum Erfassen der Oberfläche eines Rotationskörpers für eine Druckmaschine, wobei der Rotationskörper a) ein Zylinder, b) eine Walze, c) eine Hülse für einen Zylinder oder für eine Walze oder d) eine Hülse für einen Zylinder oder für eine Walze mit wenigstens einer auf der Hülse angeordneten Druckform ist, mit einem Motor zum Rotieren des Rotationskörpers um eine axiale Rotationsachse, mit wenigstens einer Lichtquelle, welche wenigstens einen Bereich der Oberfläche mit optischem Licht beleuchtet, und mit wenigstens einer optischen Kamera für das Erfassen wenigstens des beleuchteten Bereichs der Oberfläche, zeichnet sich dadurch aus, dass die Vorrichtung eine optische Einrichtung umfasst, welche das Licht von zwei Teilstrahlen, d.h. von einem ersten Teilstrahl und einem zweiten Teilstrahl, zu einem Bildsensor der Kamera lenkt, dass der erste Teilstrahl die Oberfläche an einer ersten Stelle tangential trifft oder streift und dann zur Kamera gelangt, und dass der zweite Teilstrahl die Oberfläche an einer - von der ersten Stelle verschiedenen - zweiten Stelle radial trifft und dann zur Kamera gelangt.

Ein erfindungsgemäßes Verfahren zum Erfassen der Oberfläche eines Rotationskörpers für eine Druckmaschine, wobei der Rotationskörper ein a) Zylinder, b) eine Walze, c) eine Hülse für einen Zylinder oder für eine Walze oder d) eine Hülse für einen Zylinder oder für eine Walze mit wenigstens einer auf der Hülse angeordneten Druckform ist, und wobei ein Motor den Rotationskörper um eine axiale Rotationsachse rotiert, wenigstens eine Lichtquelle wenigstens einen Bereich der Oberfläche mit optischem Licht beleuchtet und wenigstens eine optische Kamera wenigstens den beleuchteten Bereich der Oberfläche erfasst, zeichnet sich dadurch aus, dass eine optische Einrichtung das Licht von zwei Teilstrahlen, d.h. von einem ersten Teilstrahl und einem zweiten Teilstrahl, derart zur Kamera lenkt, dass gleichzeitig eine erste Stelle der Oberfläche tangential und eine zweite Stelle der Oberfläche radial erfasst wird.

### Vorteilhafte Ausbildungen und Wirkungen der Erfindung

Die Erfindung (als Vorrichtung und/oder als Verfahren) ermöglicht es in vorteilhafter Weise, eine schnelle und präzise Vermessung durchzuführen, insbesondere verschiedene Messarten gleichzeitig und/oder mit denselben Mitteln durchzuführen. Die Erfindung kommt z.B. in Mountern für Flexodruckplatten zum Einsatz.

Die Erfindung ermöglicht es in vorteilhafter Weise, Messzeit beim Vermessen eines (rotierenden) Objekts, z.B. eine auf eine Hülse gemounteten Flexodruckform, einzusparen, da zwei verschiedene, bevorzugt optische Messungen gleichzeitig oder zeitlich nahe zueinander bzw. parallel durchführbar sind: eine tangentiale Messung (des Reliefs der Oberfläche) im Abschattverfahren oder Durchlichtverfahren und eine radiale Messung (der Oberfläche) im Drauflichtverfahren. Die eingesetzte Kamera muss dabei nicht bewegt werden (außer ggf. in axialer Richtung, falls nicht mehrere Kameras in axialer Richtung angeordnet sind), was Zeit einspart. Auch deren Fokus muss nicht verändert werden, was ebenfalls Zeit einspart. Auch der oder die eingesetzte Spiegel muss/müssen nicht bewegt werden (außer ggf. in axialer Richtung), was ebenfalls Zeit einspart. Ein weiterer Vorteil ergibt sich aus der nun möglichen kompakten Bauweise, da für beide Messungen dieselbe Kamera und/oder dieselbe optische Einrichtung verwendet werden kann.

### Weiterbildungen der Erfindung

Im Folgenden werden bevorzugte Weiterbildungen der Erfindung als Vorrichtung (kurz: Weiterbildungen) beschrieben. Diese können - wo es sich nicht technisch ausschließt - auch untereinander kombiniert werden.

Eine Weiterbildung kann sich dadurch auszeichnen, dass ein erster optischer Weg der Länge L1 von der ersten Stelle zur Kamera und ein zweiter optischer Weg der Länge L2 von der zweiten Stelle zur Kamera die gleiche Länge aufweisen, d.h. L1=L2. Auf diese Weise kann eine Fokuseinstellung oder -änderung verhindert werden (es braucht nur eine einmalige initiale Fokuseinstellung). Tatsächlich kann es sein, dass L1 und L2 unwesentlich voneinander abweichen, z.B. dass L2 unwesentlich geringer als L1 ist; diese Abweichung liegt dann aber im Bereich der optischen Toleranz, d.h. immer noch im Fokus der Kamera, so dass eine Fokusänderung nicht erforderlich ist.

Eine Weiterbildung kann sich dadurch auszeichnen, dass die optische Einrichtung den zweiten Teilstrahl umlenkt, z.B. spiegelt. Eine Weiterbildung kann sich dadurch auszeichnen, dass die optische Einrichtung den ersten Teilstrahl nicht umlenkt, z.B. nicht spiegelt, sondern durch- oder vorbeilässt. Die Umlenkung des zweiten Teilstrahls kann z.B. um 90° erfolgen. Bevorzugt kommt ein halbdurchlässiger Spiegel zum Einsatz. Die optische Einrichtung könnte daher auch als "Strahlteiler" bezeichnet werden, wenn man den Strahlenverlauf umgekehrt aus "Sicht der Kamera" betrachtet, also die "Sicht-Strahlen" der Kamera betrachtet.

Eine Weiterbildung kann sich dadurch auszeichnen, dass die optische Einrichtung einen ersten Spiegel oder alternativ ein erstes Prisma umfasst. Eine Weiterbildung kann sich dadurch auszeichnen, dass der erste Spiegel ein halbdurchlässiger Spiegel ist. Eine Weiterbildung kann sich dadurch auszeichnen, dass der erste Spiegel ein polarisierender Spiegel ist. Eine Weiterbildung kann sich dadurch auszeichnen, dass die optische Einrichtung einen zweiten Spiegel oder alternativ ein zweites Prisma umfasst.

Eine Weiterbildung kann sich dadurch auszeichnen, dass die Kamera bewegbar angeordnet ist. Eine Weiterbildung kann sich dadurch auszeichnen, dass die optische Einrichtung bewegbar angeordnet ist. Eine Weiterbildung kann sich dadurch auszeichnen, dass die optische Einrichtung mit der Kamera gemeinsam bewegbar angeordnet ist. Auf diese Weise kann die Vorrichtung angepasst werden, wenn Rotationskörper mit verschiedenen Radien vermessen werden müssen. Die Bewegung erfolgt bevorzugt in eine Richtung, welche zur tangentialen Richtung und zur axialen Richtung des Rotationskörper senkrecht steht.

Eine Weiterbildung kann sich dadurch auszeichnen, dass Lichtquelle eine erste Lichtquelle umfasst, welche den ersten Teilstrahl erzeugt, und dass die Lichtquelle wenigstens eine zweite Lichtquelle umfasst, welche den zweiten Teilstrahl erzeugt. Eine Weiterbildung kann sich dadurch auszeichnen, dass wenigstens eine Lichtquelle zur Beleuchtung der ersten Stelle vorhanden ist. Das Licht der ersten Lichtquelle kann durch einen Spiegel umgelenkt und zur ersten (Mess-) Stelle der zu vermessenden Oberfläche werden. Eine Weiterbildung kann sich dadurch auszeichnen, dass wenigstens eine zweite Lichtquelle zur Beleuchtung der zweiten Stelle vorhanden ist. Eine Weiterbildung kann sich dadurch auszeichnen, dass die erste Lichtquelle im Wechsel mit der zweiten Lichtquelle aktiviert wird. Die hierdurch auf demselben Bildsensor nacheinander erzeugten beiden Bilder können unter Anwendung von Bildverarbeitung getrennt ausgewertet werden; das Auswerten kann bevorzugt nacheinander erfolgen.

Eine Weiterbildung kann sich dadurch auszeichnen, dass der zweite Spiegel oder das zweite Prisma den zweiten Teilstrahl umlenkt, bevor dieser zum ersten Spiegel oder zum ersten Prisma gelangt.

Eine Weiterbildung kann sich dadurch auszeichnen, dass der erste Spiegel oder das erste Prisma nur in einem Abschnitt des Sichtfelds der Kamera angeordnet ist (bezogen auf den Querschnitt des Sichtfelds), z.B. in einer Hälfte des Sichtfelds. Auf diese Weise kann das Licht der radialen Messung und das Licht der tangentialen Messung gleichzeitig zur Kamera bzw. deren Bildsensor gelangen. Bevorzugt werden hierzu die erste und die zweite Lichtquelle gleichzeitig aktiviert. Eine Weiterbildung kann sich dadurch auszeichnen, dass der erste Teilstrahl am ersten Spiegel vorbeigeführt wird und dass der zweite Teilstrahl zum ersten Spiegel hingelenkt und von diesem umgelenkt wird. Eine Weiterbildung kann sich dadurch auszeichnen, dass der erste Teilstrahl zu einem ersten Abschnitt des Bildsensors und der zweite Teilstrahl zu einem zweiten Abschnitt des Bildsensors gelangt. Die hierdurch auf dem Bildsensor gleichzeitig und bevorzugt nebeneinander erzeugten beiden Bilder können unter Anwendung von Bildverarbeitung getrennt ausgewertet werden; das Auswerten kann bevorzugt gleichzeitig erfolgen. Die beiden Abschnitte liegen bevorzugt direkt nebeneinander.

Eine Weiterbildung kann sich dadurch auszeichnen, dass sich der erste Spiegel oder das erste Prisma bei der (tangentialen) Messung an der ersten Stelle außerhalb des Strahlengangs zwischen der ersten Stelle und der Kamera befindet, und dass sich der erste Spiegel oder das erste Prisma bei der (radialen) Messung an der zweiten Stelle innerhalb des Strahlengang zwischen der zweiten Stelle und der Kamera befindet. Es kann bevorzugt vorgesehen sein, den ersten Spiegel nicht halbdurchlässig und bewegbar/positionierbar zu gestalten und stattdessen für die tangentiale Messung aus dem Sichtfeld der Kamera bzw. aus dem ersten und zweiten Teilstrahl wegzubewegen (bevorzugt schwenken oder linear bewegen) und dann für die radiale Messung wieder zurück in Position bzw. in das Sichtfeld bzw. in den ersten und zweiten Teilstrahl zu bewegen. Auf diese Weise gelangt nur immer ein Teilstrahl zur Kamera. Die Kamera bleibt bei dieser Lösung während der beiden Messungen bevorzugt an einem Ort, d.h. sie wird nicht bewegt. Dieses Vorgehen kostet jedoch mehr Zeit als das erfinderische Vorgehen beim parallelen Messen; im Vergleich zum seriellen Messen wird etwa dieselbe Zeit benötigt.

Im Folgenden werden bevorzugte Weiterbildungen der Erfindung als Verfahren (kurz: Weiterbildungen) beschrieben. Diese können - wo es sich nicht technisch ausschließt - auch untereinander kombiniert werden.

Eine Weiterbildung kann sich dadurch auszeichnen, dass mit dem ersten Teilstrahl Informationen zur lokalen Höhe der Oberfläche erfasst werden. Eine Weiterbildung kann sich dadurch auszeichnen, dass die Oberfläche derart vollständig erfasst wird, dass rechentechnisch ein vollständiges Höhenprofil der Oberfläche erstellt wird. Eine Weiterbildung kann sich dadurch auszeichnen, dass mit dem zweiten Teilstrahl Informationen zur lokalen Vorhandensein von druckenden und nicht druckenden Stellen der Oberfläche erfasst werden. Eine Weiterbildung kann sich dadurch auszeichnen, dass die Oberfläche derart vollständig erfasst wird, dass rechentechnisch ein vollständiges Druckprofil der Oberfläche erstellt wird.

Die in den obigen Abschnitten Technisches Gebiet, Erfindung und Weiterbildungen sowie im folgenden Abschnitt Ausführungsbeispiele offenbarten Merkmale und Merkmalskombinationen stellen - in beliebiger Kombination miteinander - weitere vorteilhafte Weiterbildungen der Erfindung dar.

### Ausführungsbeispiele zur Erfindung und Figuren

Die Figuren 1 bis 3 zeigen bevorzugte Ausführungsbeispiele der Erfindung und der Weiterbildungen. Einander entsprechende Merkmale sind in den Figuren mit denselben Bezugszeichen versehen. Sich in den Figuren wiederholende Bezugszeichen wurden der Übersichtlichkeit teils weggelassen.

Die Figuren 1 bis 3 zeigen jeweils eine schematische Darstellung einer Schnittansicht eines bevorzugen Ausführungsbeispiels der erfindungsgemäßen Vorrichtung bei der Durchführung des erfindungsgemäßen Verfahrens; die Figuren 2 und 3 in vereinfachter Darstellung.

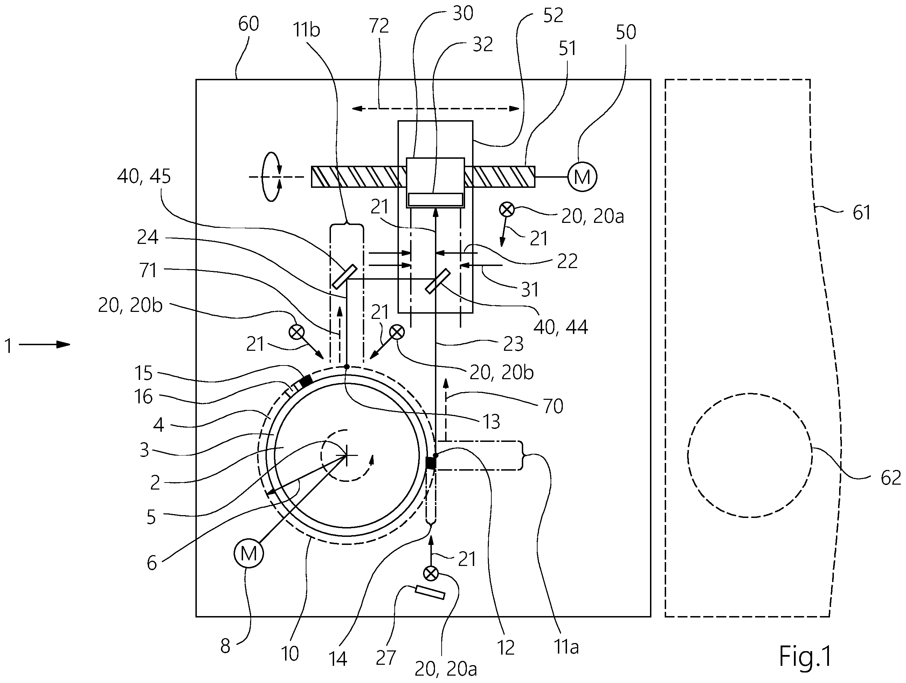

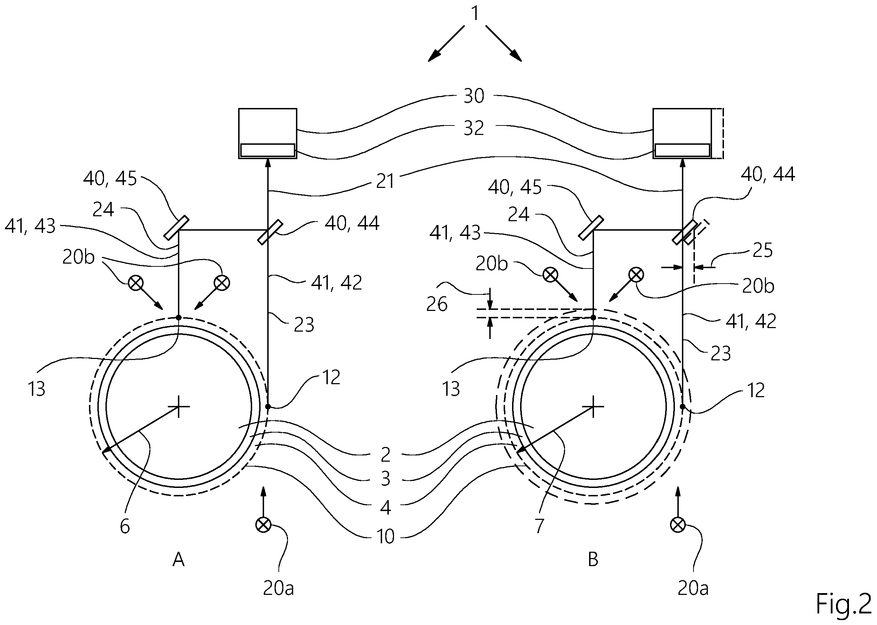

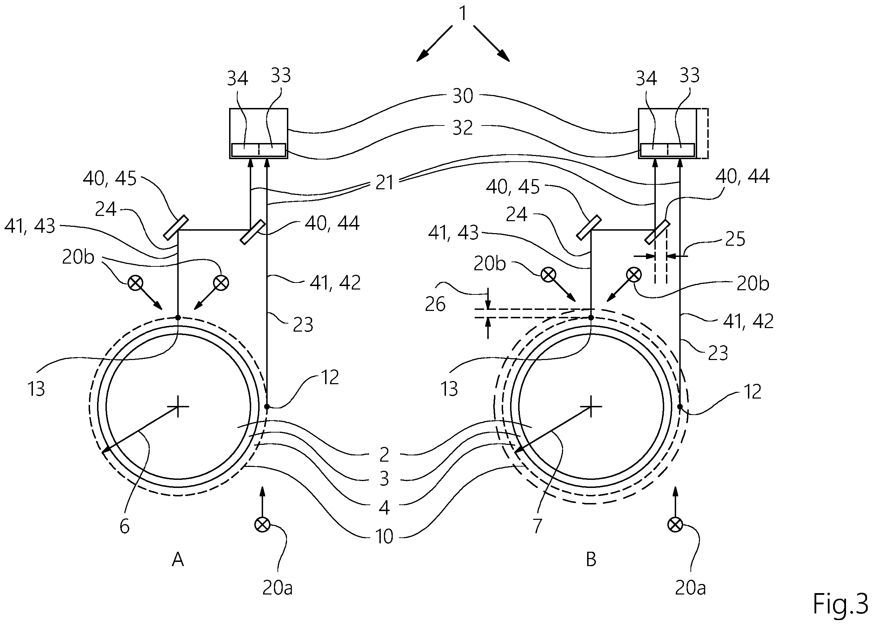

Figur 1 zeigt eine Vorrichtung 1. Diese dient dem Vermessen eines rotierbaren Rotationskörpers 2, insbesondere eines Messzylinder mit aufgeschobener Hülse 3 und darauf montierter Druckform/-en 4. Die Rotation erfolgt um eine Rotationsachse 5 (diese definiert die in dieser Anmeldung genannte axiale Richtung). Die Druckform 4 hat einen Radius 6, wobei mit Blick auf Figur 2 und Figur 3 erkennbar ist, dass der Radius bei aufeinander folgenden Messungen variieren kann (Radius 6 und abweichender Radius 7). Die Rotation erfolgt mittels eines Antriebs, insbesondere des Motors 8.

Der Rotationskörper 2, hier die Druckform 4 umfasst eine Oberfläche 10. Zwei Bereiche 11a und 11b dieser Oberfläche sollen gleichzeitig oder zumindest zeitnah vermessen werden, wobei die Bereiche durch die Rotation über die Oberfläche "wandern". Im Bereich 11a liegt eine erste zu vermessende Stelle 12; im Bereich 11b eine zweite zu vermessende Stelle 13. Die beiden Stellen 12 und 13 können sich in axialer Richtung erstrecken, d. h. Messlinien sein. An der Stelle 12 soll die lokale Höhe 14 der Oberfläche 10 gemessen werden; an der Stelle 13 soll durch die Messung erkannt werden, ob es sich um druckende Stellen 15 oder nichtdruckende Stellen 16 handelt.

Die Beleuchtung erfolgt mit wenigstens einer Lichtquelle 20. Diese sendet Licht 21 aus, welches optisch erfasst wird. Bei kommt eine optische Kamera 30 mit einem Sichtfeld 31 zum Einsatz. Die Kamera 30 umfasst wenigstens einen optischen Chip 32. Im Falle der tangentialen Messung (siehe unten) erfolgt die Beleuchtung entweder mit der ersten Lichtquelle 20a (von "oben") über einen Spiegel 27 oder alternativ mit der ersten Lichtquelle 20a (von "unten") ohne Spiegel; im Falle der radialen Messung (siehe unten) mit den beiden zweiten Lichtquellen 20b, wobei die letztgenannten bevorzugt abwechselnd aktiviert werden und dadurch wechselnde Beleuchtungsszenarien und damit Schattenwürfe für das Erfassen und Auswerten erzeugen. Das Licht der ersten Lichtquelle 20a gelangt über den ersten optischen Weg 23 zur Kamera 30; das Licht der zweiten Lichtquellen 20b über den zweiten optischen Weg 24.

Die Kamera 30 ist für das Vermessen verschiedener Druckformen 4 bewegbar angeordnet. Der Antrieb der Bewegung erfolgt über einen zweiten Motor 50 und eine Spindel 51. Dabei ist die Kamera bevorzugt an einem Träger 52 angeordnet, welcher sich bei der Rotation der Spindel 51 in Richtung 72 hin und her bewegen lässt.

Die Vorrichtung 1 umfasst eine optische Einrichtung 40, welche gemäß der dargestellten Ausführungsform einen ersten Spiegel 44 und einen zweiten Spiel 45 aufweist. Der erste Spiegel 44 ist bevorzugt - wie die Kamera 30 - am Träger 52 angeordnet und damit gemeinsam mit der Kamera 30 b in Richtung 72 bewegbar. Der zweite Spiel 45 ist bevorzugt ortsfest angeordnet.

Die Vorrichtung 1 kann Teil eines Messgeräts 60, zum Beispiel eines sogenannten Mounters, sein. Die Vorrichtung 1 wird erfindungsgemäß dazu verwendet, eine Messung wenigstens einer Druckform 4 in tangentialer Richtung 70 und gleichzeitig oder zumindest zeitnah eine Messung in radialer Richtung 71 durchzuführen. Die so vermessene Druckform 4 kann anschließend in einer Druckmaschine 61 auf einem Zylinder 62 für das Drucken eingesetzt werden, bevorzugt zusammen mit der Hülse 3.

Figur 2 zeigt dieselbe Vorrichtung 1 einmal beim Vermessen einer Druckform 4 mit einem ersten Radius 6 (Darstellung A) und einmal beim Vermessen einer Druckform 4 mit einem abweichenden, insbesondere geringeren, zweiten Radius 7 (Darstellung B): entsprechend sind auch Druckformen mit größeren Radien vermessbar.

In Darstellung A gelangt Licht 21 für die tangentiale Messung zur ersten Stelle 12 und von dort durch den halbtransparenten ersten Spiegel 44 (ungespiegelt) zur Kamera 30 bzw. zum Bildsensor 32; ebenso gelangt Licht 21 für die radiale Messung zur zweiten Stelle 13 und von dort am zweiten Spiel 45 und am halbtransparenten ersten Spiegel 44 jeweils gespielt zur Kamera 30. In Darstellung B ist - durch die vergleichende, gepunktete Darstellung der Kamera 30 und des ersten Spiegels 44 - erkennbar, dass die Kamera 30 mit ihrem Bildsensor 32 und zusammen mit dem ersten Spiegel 44 ein wenig (nach links) bewegt und damit positioniert wurde. Auf diese Weise kann eine Druckform 4 mit geringerem zweitem Radius 7 bzw. deren Oberfläche 10 vermessen werden. Der erste optische Weg 23 von der ersten Stelle 12 zur Kamera 30 und der zweite optische Weg 24 von der zweiten Stelle 13 zur Kamera 30 bleiben beim Neupositionieren der Kamera 30 jeweils gleich lang. Die erste Weglängenänderung 25 (Abnahme) im zweiten Teilstrahl 43 und die zweite Weglängenänderung 26 (Zunahme) im zweiten Teilstrahl 43 kompensieren sich dabei. Für das Vermessen wird die erste Lichtquelle 20a im Wechsel mit den beiden zweiten Lichtquellen 20b aktiviert. So gelangt abwechselnd (Mess-) Licht 21 der ersten (Mess-) Stelle 12 und der zweiten (Mess-) Stelle 13 zum Bildsensor 32. Die Auswertung des Bildsensor 32 bzw. der aufgenommenen Bilder erfolgt daher bevorzugt ebenfalls abwechselnd.

Alternativ kann der erste Spiegel 44 nicht halbtransparent und bewegbar sein, z.B. horizontal, und für die tangentiale Messung der ersten Stelle 12 aus dem Strahlengang 21 bewegt werden und für die radiale Messung der zweiten Stelle 13 in den Strahlengang 21 bewegt werden.

Figur 3 zeigt eine ähnliche Vorrichtung 1 einmal beim Vermessen einer Druckform 4 bzw. deren Oberfläche 10 mit einem ersten Radius 6 (Darstellung A) und einmal beim Vermessen einer Druckform 4 mit einem abweichenden, insbesondere geringeren, zweiten Radius 7 (Darstellung B). Der Aufbau ist weitgehend gleich mit dem Aufbau in Figur 2. Es ist jedoch erkennbar, dass der Bildsensor 32 in einen ersten Abschnitt 33 und einen zweiten Abschnitt 34 unterteilt ist. Diese Unterteilung ist bevorzugt nicht physischer Natur, sondern ist lediglich in der Auswertung der Daten des Bildsensor 32 verwirklicht. Der erste Spiegel 44 befindet sich nur im Strahlengang des zweiten optischen Wegs 24, nicht jedoch im Strahlengang des ersten optischen Wegs 23 (im Vergleich zur Figur 1 ist der Spiegel 44 nur in einem - auf den zweiten Abschnitt 34 eingeschränkten - Abschnitt 22 des Kamerasichtfelds positioniert). Ansonsten erfolgt die Messung in gleicher Weise wie in Figur 2 dargestellt und wie aus den beiden Darstellungen A und B der Figur 3 im Vergleich zueinander erkennbar: die Kamera 30 und deren Bildsensor 32 mit den beiden Abschnitten 33 und 34 wird in Richtung 72 bewegt und für die Messung positioniert, wobei der erste optische Weg 23 und der zweite optische Weg 24 wiederum gleich lang bleiben. Die Lichtquellen 20a und 20b werden bevorzugt gleichzeitig aktiviert: die tangentiale Messung erfolgt mit dem ersten Bildsensor-Abschnitt 33; die radiale Messung gleichzeitig mit dem zweiten Bildsensor-Abschnitt 34.

### Bezugszeichenliste

- 1: Vorrichtung
- 2: Rotationskörper, insbesondere Messzylinder mit Hülse und Druckform/-en
- 3: Hülse
- 4: Druckform
- 5: Rotationsachse
- 6: erster Radius
- 7: zweiter Radius
- 8: erster Motor (Rotation des Rotationskörpers)
- 10: Oberfläche
- 11a: Bereich der Oberfläche
- 11b: Bereich der Oberfläche
- 12: erste Stelle der Oberfläche
- 13: zweite Stelle der Oberfläche
- 14: lokale Höhe der Oberfläche
- 15: druckende Stelle
- 16: nicht druckende Stelle
- 20: Lichtquelle
- 20a: erste Lichtquelle
- 20b: zweite Lichtquelle
- 21: Licht bzw. Strahlengang des Licht
- 22: Abschnitt des Kamerasichtfeldes
- 23: erster optischer Weg
- 24: zweiter optischer Weg
- 25: erste Weglängenänderung
- 26: zweite Weglängenänderung
- 27: Spiegel
- 30: Kamera
- 31: Sichtfeld
- 32: Bildsensor
- 33: erster Abschnitt
- 34: zweiter Abschnitt
- 40: optische Einrichtung
- 41: Teilstrahlen
- 42: erster Teilstrahl
- 43: zweiter Teilstrahl
- 44: erster Spiegel, alternativ erstes Prisma
- 45: zweiter Spiegel, alternativ zweites Prisma
- 50: zweiter Motor (Translation der Kamera und des Spiegels)
- 51: Spindel
- 52: Träger für Kamera und Spiegel
- 60: Messgerät, insbesondere Mounter
- 61: Druckmaschine
- 62: Rotationskörper
- 70: tangentiale Richtung
- 71: radiale Richtung
- 72: Bewegungsrichtung

## Patentansprüche

1. Vorrichtung zum Erfassen der Oberfläche eines Rotationskörpers für eine Druckmaschine, wobei der Rotationskörper (2, 62) a) ein Zylinder, b) eine Walze, c) eine Hülse für einen Zylinder oder für eine Walze oder d) eine Hülse für einen Zylinder oder für eine Walze mit wenigstens einer auf der Hülse angeordneten Druckform ist, mit einem Motor (8) zum Rotieren des Rotationskörpers (2, 62) um eine axiale Rotationsachse (5),
mit wenigstens einer Lichtquelle (20), welche wenigstens einen Bereich (11a, 11b) der Oberfläche (10) mit optischem Licht (21) beleuchtet, und
mit wenigstens einer optischen Kamera (30) für das Erfassen wenigstens des beleuchteten Bereichs (11a, 11b) der Oberfläche (10),
**dadurch gekennzeichnet,**
**dass** die Vorrichtung (1) eine optische Einrichtung (40) umfasst, welche das Licht (21) von zwei Teilstrahlen (41), d.h. von einem ersten Teilstrahl (42) und einem zweiten Teilstrahl (43), zu einem Bildsensor (32) der Kamera (30) lenkt,
**dass** der erste Teilstrahl (42) die Oberfläche (10) an einer ersten Stelle (12) tangential trifft oder streift und dann zur Kamera (30) gelangt, und
**dass** der zweite Teilstrahl (43) die Oberfläche (10) an einer - von der ersten Stelle (12) verschiedenen - zweiten Stelle (13) radial trifft und dann zur Kamera (30) gelangt.

2. Vorrichtung nach Anspruch 1,
**dadurch gekennzeichnet,**
**dass** ein erster optischer Weg (23) der Länge L1 von der ersten Stelle (12) zur Kamera (30) und ein zweiter optischer Weg (24) der Länge L2 von der zweiten Stelle (13) zur Kamera (30) die gleiche Länge aufweisen, d.h. L1=L2.

3. Vorrichtung nach einem der vorhergehenden Ansprüche,
**dadurch gekennzeichnet,**
**dass** der die optische Einrichtung (40) einen ersten Spiegel (44) oder ein erstes Prisma (44) umfasst.

4. Vorrichtung nach Anspruch 3,
**dadurch gekennzeichnet,**
**dass** der erste Spiegel ein halbdurchlässiger Spiegel (44) ist.

5. Vorrichtung nach einem der vorhergehenden Ansprüche 3 oder 4,
**dadurch gekennzeichnet,**
**dass** die optische Einrichtung (40) einen zweiten Spiegel (45) oder ein zweites Prisma (45) umfasst.

6. Vorrichtung nach Anspruch 5,
**dadurch gekennzeichnet,**
**dass** der zweite Spiegel (45) oder das zweite Prisma (45) den zweiten Teilstrahl (43) umlenkt, bevor dieser zum ersten Spiegel (44) oder zum ersten Prisma (44) gelangt.

7. Vorrichtung nach einem der vorhergehenden Ansprüche,
**dadurch gekennzeichnet,**
**dass** die Lichtquelle (20) eine erste Lichtquelle (20a) umfasst, welche den ersten Teilstrahl (42) erzeugt, und dass die Lichtquelle (20) wenigstens eine zweite Lichtquelle (20b) umfasst, welche den zweiten Teilstrahl (43) erzeugt.

8. Vorrichtung nach Anspruch 7,
**dadurch gekennzeichnet,**
**dass** die erste Lichtquelle (20a) im Wechsel mit der zweiten Lichtquelle (20b) aktiviert wird.

9. Vorrichtung nach einem der vorhergehenden Ansprüche,
**dadurch gekennzeichnet,**
**dass** der erste Spiegel (44) oder das erste Prisma (44) nur in einem Abschnitt des Sichtfelds (31) der Kamera (30) angeordnet ist.

10. Vorrichtung nach Anspruch 9,
**dadurch gekennzeichnet,**
**dass** der erste Teilstrahl (42) am ersten Spiegel (44) vorbeigeführt wird und dass der zweite Teilstrahl (43) zum ersten Spiegel (44) hingelenkt und von diesem umgelenkt wird.

11. Vorrichtung nach einem der Ansprüche 9 oder 10,
**dadurch gekennzeichnet,**
**dass** der erste Teilstrahl (42) zu einem ersten Abschnitt (33) des Bildsensors (32) und der zweite Teilstrahl (43) zu einem zweiten Abschnitt (34) des Bildsensors (32) gelangt.

12. Vorrichtung nach Anspruch 8,
**dadurch gekennzeichnet,**
**dass** sich der erste Spiegel (44) oder das erste Prisma (44) bei der Messung an der ersten Stelle (12) außerhalb des Strahlengangs (21) zwischen der ersten Stelle (13) und der Kamera (30) befindet, und dass sich der erste Spiegel (44) oder das erste Prisma (44) bei der Messung an der zweiten Stelle (13) innerhalb des Strahlengang (21) zwischen der zweiten Stelle (13) und der Kamera (30) befindet.

13. Verfahren zum Erfassen der Oberfläche eines Rotationskörpers für eine Druckmaschine, wobei der Rotationskörper (2, 62) ein a) Zylinder, b) eine Walze, c) eine Hülse für einen Zylinder oder für eine Walze oder d) eine Hülse für einen Zylinder oder für eine Walze mit wenigstens einer auf der Hülse angeordneten Druckform ist, und wobei ein Motor (8) den Rotationskörper (2, 62) um eine axiale Rotationsachse (5) rotiert, wenigstens eine Lichtquelle (20) wenigstens einen Bereich (11a, 11b) der Oberfläche (10) mit optischem Licht (21) beleuchtet und wenigstens eine optische Kamera (30) wenigstens den beleuchteten Bereich (11a, 11b) der Oberfläche (10) erfasst,
**dadurch gekennzeichnet,**
**dass** eine optische Einrichtung (40) das Licht (21) von zwei Teilstrahlen (41), d.h. einem ersten Teilstrahl (42) und einem zweiten Teilstrahl (43), derart zur Kamera (30) lenkt, dass gleichzeitig eine erste Stelle (12) der Oberfläche (10) tangential und eine zweite Stelle (13) der Oberfläche (10) radial erfasst wird.

14. Verfahren nach Anspruch 13,
**dadurch gekennzeichnet,**
**dass** mit dem ersten Teilstrahl (42) Informationen zur lokalen Höhe (14) der Oberfläche (10) erfasst werden.

15. Verfahren nach Anspruch 14,
**dadurch gekennzeichnet,**
**dass** die Oberfläche (10) derart vollständig erfasst wird, dass rechentechnisch ein vollständiges Höhenprofil der Oberfläche (10) erstellt wird.

16. Verfahren nach einem der Ansprüche 13 bis 15,
**dadurch gekennzeichnet,**
**dass** mit dem zweiten Teilstrahl (43) Informationen zur lokalen Vorhandensein von druckenden und nicht druckenden Stellen (15, 16) der Oberfläche (10) erfasst werden.

17. Verfahren nach Anspruch 16,
**dadurch gekennzeichnet,**
**dass** die Oberfläche (10) derart vollständig erfasst wird, dass rechentechnisch ein vollständiges Druckprofil der Oberfläche (10) erstellt wird.
